(19) Europäisches Patentamt
European Patent Office
Office européen des brevets

(11) **EP 1 219 641 B1**

(12) **EUROPÄISCHE PATENTSCHRIFT**

(45) Veröffentlichungstag und Bekanntmachung des Hinweises auf die Patenterteilung:
**04.01.2012 Patentblatt 2012/01**

(51) Int Cl.:
*C08F 2/24* $^{(2006.01)}$    *C08F 2/18* $^{(2006.01)}$
*C08L 57/00* $^{(2006.01)}$

(21) Anmeldenummer: **01128076.5**

(22) Anmeldetag: **27.11.2001**

(54) **Diffus ausgestattete Formmassen und hieraus erhältliche Formkörper**

Diffuse provided moulding mixtures and moulded products prepared from these

Matières de moulage pourvu diffuses et produits moulés préparés de ces matières:

(84) Benannte Vertragsstaaten:
**AT BE CH CY DE DK ES FI FR GB GR IE IT LI LU MC NL PT SE TR**

(30) Priorität: **28.12.2000 DE 10065492**

(43) Veröffentlichungstag der Anmeldung:
**03.07.2002 Patentblatt 2002/27**

(73) Patentinhaber: **Evonik Röhm GmbH**
**64293 Darmstadt (DE)**

(72) Erfinder:
• **Schultes, Klaus**
  **65197 Wiesbaden (DE)**
• **Süfke, Thomas**
  **64390 Erzhausen (DE)**
• **Parusel, Markus**
  **64409 Messel (DE)**
• **Höss, Werner**
  **63150 Heusenstamm (DE)**

(56) Entgegenhaltungen:
**DE-A1- 19 844 716    GB-A- 722 219**
**US-A- 5 451 650**

• **CHEMICAL ABSTRACTS, vol. 92, no. 8, 25. Februar 1980 (1980-02-25) Columbus, Ohio, US; abstract no. 59433, "SUSPENSION POLYMERIZATION AND COPOLYMERIZATION OF METHACRYLIC MONOMERS" Seite 15; Spalte 2; XP002189328 & RO 62 938 A (INTREPRINDEREA CHIMICA CARBOSIN) 15. März 1978 (1978-03-15)**

**Beschreibung**

Die vorliegende Erfindung betrifft diffus ausgestattete Formmassen entsprechend Anspruch 1 aufweisend Matrixpolymere und Perlpolymerisate mit einer mittleren Teilchengröße im Bereich von 5 bis 40 μm, die eine Diffuseur zwischen dem Brechungsindex der Matrixpolymere und dem Brechungsindex des Perlpolymerisate, gemessen beiden Na-D-Linie (589 nm) und bei 20˚C von mindestens 0.01 aufweist, wobei die Perlpolymerisate nach einem Verfahren erhältlich sind, bei dem man eine polymerisierbare Zusammensetzung, die mindestens 50 Gew.-% (Meth)acrylate aufweist, in wäßriger Phase dispergiert und polymerisiert. Des weiteren sind lichtstreuende Formkörper Gegenstand der vorliegenden Erfindung, die durch thermoplastisches Formen der erfindungsgemäßen Formmassen erhältlich sind.

Für verschiedene Zwecke, beispielsweise zur Herstellung von Abdeckungen für Beleuchtungskörpern, werden Standardformmassen lichtstreuend oder diffus ausgestattet.

Hierzu werden insbesondere klassische Trübungsmittel, wie z.B. $BaSO_4$ oder $TiO_2$, verwendet, die jedoch eine geringe Lichtausbeute zeigen, da ein großer Teil des Lichtes rückwärts gestreut wird.

Neuerdings werden jedoch auch sogenannten Streuperlen, welche vernetzt sind und einen anderen Brechungsindex als die Matrix besitzen, eingesetzt. Zur Zeit werden in diesen Formmassen Streuteilchen auf PMMA-Basis mit einer Teilchengröße von weit über 40 μm verwendet. Der Vorteil dieser Streuteilchen liegt in der hohen Vorwärtsstreuung der Formkörper nach der Einarbeitung der Streuteilchen in die Formmassen. Diese bevorzugte Vorwärtsstreuung kann durch Messung der Transmission in der Kombination mit dem Energiehalbwertswinkel von Formkörpern, die Streuperlen enthalten, bestimmt werden.

Je kleiner die Teilchengröße der Streuperlen ist, desto höher ist der Streueffekt. Durch Verwendung kleinerer Perlen kann daher deren Menge verringert werden. Dies spart Kosten und schont die Ressourcen. Des weiteren zeigen die mit den kleineren Perlpolymerisaten ausgestatteten Formmassen hervorragende mechanische Eigenschaften, da die verminderte Menge an Streuperlen diese Eigenschaften weniger stark beeinflußt. Werden

Streuperlen mit einem Durchmesser kleiner als 5 μm eingesetzt, nimmt der Gelbeindruck der so hergestellten Formmassen deutlich zu.

Durch einen speziellen Versuch, bei dem eine Lichtstreuteilchen aufweisende PMMA-Gußplatte von der Seite ausgeleuchtet wird, zeigt sich, daß optimale

Teilchen eine Größe im Bereich von 5-20 μm haben, wobei die Größenverteilung möglichst eng sein sollte.

Polymerteilchen in der Größenordnung zwischen 1 - 10 μm lassen sich über eine Fällungspolymerisation, bei der große Mengen an organischen Lösungsmitteln eingesetzt werden, gut realisieren. Allerdings sind die verwendeten Lösungsmittel sicherheitstechnisch und abfalltechnisch nicht einfach zu handhaben. Auch die Aufarbeitung bereitet Probleme. Daher sind so erhaltene Perlen teuer und werden in den oben dargelegten Anwendungsgebieten aus Kostengründen nicht eingesetzt.

Kostengünstiger lassen sich Polymerperlen durch konventionelle Suspensionspolymerisation gewinnen. Allerdings sind die so erhaltenen Teilchen im allgemeinen größer als 40 μm und zeigen eine breite Verteilung.

Beispielsweise ist aus EP-A-0 443 609 ein Suspensionsverfahren zur Herstellung von Perlpolymerisaten bekannt, bei dem man zwei getrennt zugeführte Phasen (Monomere und kontinuierliche Phase) in einer Mischzelle mit hoher Scherenergie vereinigt und danach die Monomere in einem üblichen Reaktionskessel polymerisiert. Es werden verschiedene Hilfsstoffe zur Stabilisierung der Dispersion genannt. Hierzu gehören unter anderem anorganische Stoffe, wie Calciumphosphat, und organische Verbindungen, wie Cellulosederivate oder Polyvinylalkohol. Die Verwendung von Aluminiumverbindungen wird in EP-A-0 443 609 nicht beschrieben.

In den Beispielen wird dargelegt, daß Teilchengrößen im Bereich von 5 bis 10 μm erhalten werden. Allerdings bestand die Monomerenmischung zu 80 Gew.-% aus Styrol. Wiederholt man diese Versuche unter Verwendung von Mischungen, die mehr als 50 Gew.-% acrylische Monomere aufweisen, so tritt eine starke Vergrößerung der Teilchen auf. Bei Verwendung von bekannten organischen Stabilisatoren werden zwar kleine Teilchen erhalten. Verarbeitet man diese Teilchen in Formmassen tritt eine starke Gelbfärbung auf, die zu einer vermehrten Rückstrahlung, also zu einer geringeren Lichtausbeute führt.

Die DE 19844716 beschreibt ein laminiertes, extrudiertes, flächiges Kunststofferzeugnis, das durch Laminieren einer Harzschicht B auf beide Oberflächen einer Harzschicht A erhältlich ist. Die Harzschicht A enthält Perlen, dispergiert in PMMA. Die Teilchen werden über Suspensionspolymerisation hergestellt und mit Windsichten auf eine einheitliche Gewichtsverteilung gebracht, die einer Teilchengröße zwischen 30 und 40 μm entspricht. Die Darstellung von Teilchen mit einer Teilchengröße zwischen 1 und 20 μm wird nicht aufgezeigt.

In der US 5,451,650 wird ein Verfahren zur Herstellung von Lichtstreuteilchen beschrieben. Die Herstellung der hier beschriebenen Fällungspolymerisate ist sehr aufwendig und erfolgt unter Einsatz von organischen Lösungsmitteln, vorzugsweise Cyclohexan. Die Verwendung von Cyclohexan ist unter Sicherheitsaspekten bedenklich.

In Anbetracht des hierin angegebenen und diskutierten Standes der Technik war es mithin Aufgabe der vorliegenden Erfindung diffus ausgestattete Formmassen anzugeben, die kostengünstig und umweltfreundlich herstellbar sind.

Insbesondere sollten die Perlpolymerisate, die in die Formmassen eingearbeitet werden, durch ein Verfahren herstellbar sein, bei dem man Teilchen mit einer mittleren Größe im Bereich von 5 bis 40 $\mu$m erhält, ohne daß man ein organisches Lösungsmittel in großen Mengen verwendet, das nach der Polymerisation abgetrennt werden muß.

Eine weitere Aufgabe der Erfindung bestand darin, diffus ausgestattete, mit Perlpolymerisat abgemischte Formmassen anzugeben, wobei die Perlpolymerisate durch Verfahren erhältlich sind, die mit kommerziell erhältlichen Anlagen durchgeführt werden können.

Des weiteren lag der Erfindung die Aufgabe zugrunde, zur Herstellung der in den Formmassen einzusetzenden Perlpolymerisate ein Verfahren bereitzustellen, das ohne größeres Sicherheitsrisiko verwirklicht werden kann. Insbesondere die Freisetzung von umweltschädlichen Stoffen oder deren Handhabung sollte vermieden werden.

Ein weiteres Ziel der vorliegenden Erfindung bestand darin, ein Verfahren zur Herstellung der in den Formmassen zu verwendenden Perlpolymerisate anzugeben, bei dem die erhaltene Suspension durch Filtration, insbesondere unter Druck bzw. Vakuum, aufgearbeitet werden kann.

Des weiteren sollten diffuse Formkörper mit hervorragenden Eigenschaften zur Verfügung gestellt werden, die kostengünstig herstellbar sind.

Eine weitere Aufgabe der vorliegenden Erfindung bestand darin Formkörper zur Verfügung zu stellen, die eine hohe Transmission, eine geringe Gelbfärbung und einen hohen Energiehalbwertswinkel aufweisen.

Ein weiteres zu lösendes Problem lag darin begründet, Formkörper mit hervorragenden mechanischen Eigenschaften zu schaffen. Insbesondere sollten die Formkörper eine hohe Schlagfestigkeit und Wetterfestigkeit besitzen. Insbesondere sollten die lichtstreuenden Formkörper durch Lichteinwirkung über eine längere Zeit keine Verfärbung zeigen, die insbesondere bei einem Abbau der Perlpolymerisate auftreten können. Darüber hinaus sollten die Formkörper eine hohe Kratzfestigkeit zeigen.

Gelöst werden diese Aufgaben sowie weitere, die zwar nicht wörtlich genannt werden, sich aber aus den hierin diskutierten Zusammenhängen wie selbstverständlich ableiten lassen oder sich aus diesen zwangsläufig ergeben, durch die in Anspruch 1 beschriebenen Maßnahmen. Zweckmäßige Abwandlungen des erfindungsgemäßen Verfahrens werden in den auf Anspruch 1 rückbezogenen Unteransprüchen unter Schutz gestellt.

Hinsichtlich der Formkörper bieten die Ansprüche 15 bis 19 ein hervorragendes Resultat in bezug auf die zugrundeliegenden Probleme.

Dadurch, daß man eine polymerisierbare Zusammensetzung, die mindestens 50 Gew.-% (Meth) acrylate aufweist, in wäßriger Phase dispergiert und polymerisiert, wobei man die mit einer Aluminiumverbindung stabilisierte

Dispersion bei einer Schergeschwindigkeit $\geq$ $10^3$ s$^{-1}$ herstellt, gelingt es hochwertige Perlpolymerisate mit einer mittleren Teilchengröße im Bereich von 5 bis 40 $\mu$m, die einen vom Matrixpolymer um mindestens 0.01 unterschiedlichen Brechungsindex $n_D$ bei 20˚C aufweisen, zur Verfügung zu stellen, mit denen Matrixpolymere kostengünstig diffus ausgestattet werden können.

Durch die erfindungsgemäßen Maßnahmen werden u.a. insbesondere folgende Vorteile erzielt:

➢ Die erfindungsgemäßen Formmassen können kostengünstig und umweltfreundlich hergestellt werden, da die Perlpolymere, ohne große Mengen an organischen Lösungsmitteln erhalten werden können. Hierdurch kann insbesondere die Freisetzung von umweltschädlichen Stoffen oder deren Handhabung vermieden werden.

➢ Das Polymerisationsverfahren zur Herstellung der in den Formmassen einzusetzenden Perlpolymerisate kann mit kommerziell erhältlichen Anlagen durchgeführt werden.

➢ Die zur diffusen Ausstattung der Formmassen verwendeten Perlpolymerisate können erfindungsgemäß ohne größeres Sicherheitsrisiko erhalten werden, da die Verwendung von organischen Lösungsmitteln höchstens in minimalen Mengen erfolgt.

➢ Das Verfahren, durch das die Perlpolymerisate erzeugt werden, erlaubt eine Filtration, die ein einfaches Abtrennen von Verunreinigungen ermöglicht. Hierdurch können die Formmassen in hoher Reinheit kostengünstig erhalten werden.

➢ Lichtstreuende Formkörper, die durch formen erfindungsgemäßer Formmassen erhältlich sind, zeigen einen geringen Gelbwert, eine hohe Transmission und einen großen Energiehalbwertswinkel. Diese Eigenschaften werden auch durch starke Lichteinwirkung über längere Zeit nicht oder nur geringfügig beeinträchtigt.

➢ Des weiteren weisen die Formkörper der vorliegenden Erfindung hervorragende mechanische und optische Eigenschaften auf. Insbesondere besitzen die Formkörper eine hohe Schlagfestigkeit, eine hohe Kratzfestigkeit, eine hohe Lichtbeständigkeit und eine hervorragende Wetterfestigkeit.

Die im Rahmen der vorliegenden Erfindung einzusetzenden Perlpolymerisate weisen eine mittlere Teilchengröße im Bereich von 5 bis 40 $\mu$m, vorzugsweise von 5 bis 20 $\mu$m auf. Die Teilchengröße bezieht sich auf den Partikeldurchmesser. Dieser Wert kann beispielsweise durch Laserextinktionsverfahren bestimmt werden. Hierzu kann ein CIS-Teilchen-Analysator der Fa. L.O.T. GmbH verwendet werden, wobei die Meßmethode zur Bestimmung der Teilchengröße im Benutzerhandbuch enthalten ist. Diese Methode ist bevorzugt. Darüber hinaus kann die Teilchengröße durch Messen und Auszählen der Teilchen auf entsprechenden Rasterelektronenmikroskop-Aufnahmen ermittelt werden.

Besondere Ausführungsformen der erfindungsgemäß zu verwendenden Perlpolymerisate zeigen eine enge Größenverteilung. Besonders bevorzugt ist die Standardabweichung vom gemittelten Partikeldurchmesser $\leq 20\mu m$ und ganz besonders bevorzugt $< 10\mu m$.

In besonderen Ausgestaltungen der erfindungsgemäßen Formmassen werden sphärische oder kugelförmige Perlpolymerisate eingesetzt, die nicht oder nur in geringem Maß koagulieren, aggregieren oder zusammenlagern.

Die zu polymerisierende Zusammensetzung weist mindestens 50 Gew.-% (Meth)acrylat, bezogen auf das Gewicht der Monomeren, auf. Vorzugsweise beträgt der Anteil der (Meth)acrylate mindestens 60 Gew.-% und besonders bevorzugt mindestens 80 Gew.-%, bezogen auf das Gewicht der Monomeren. Der Ausdruck polymerisierbare Zusammensetzung bezeichnet ethylenisch ungesättigte Monomere, die einzeln oder als Mischung eingesetzt werden können.

Der Ausdruck (Meth)acrylate umfaßt Methacrylate und Acrylate sowie Mischungen aus beiden. Diese Monomere sind weithin bekannt.

Zu diesen gehören unter anderem (Meth)acrylate, die sich von gesättigten Alkoholen ableiten, wie beispielsweise Methyl(meth)acrylat, Ethyl(meth)acrylat, Propyl(meth)acrylat, n-Butyl(meth)acrylat, tert.-Butyl(meth)acrylat, Pentyl(meth)acrylat und 2-Ethylhexyl (meth)acrylat; (Meth)acrylate, die sich von ungesättigten Alkoholen ableiten, wie z. B. Oleyl(meth)acrylat, 2-Propinyl (meth)acrylat, Allyl(meth)acrylat, Vinyl(meth)acrylat;

Aryl(meth)acrylate, wie Benzyl(meth)acrylat oder Phenyl (meth)acrylat, wobei die Arylreste jeweils unsubstituiert oder bis zu vierfach substituiert sein können;

Cycloalkyl(meth)acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, 2-Hydroxyethyl (meth)acrylat, 2-Hydroxypropyl(meth)acrylat;

Glycoldi(meth)acrylate, wie 1,4-Butandiol(meth)acrylat, (Meth)acrylate von Etheralkoholen, wie Tetrahydrofurfuryl (meth)acrylat,

Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol;

schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid;

mehrwertige (Meth)acrylate, wie Trimethyloylpropantri (meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten copolymerisierbar sind. Im allgemeinen werden diese Verbindungen in einer Menge von 0 bis 50 Gew.-%, vorzugsweise 0 bis 40 Gew.-% und besonders bevorzugt 0 bis 20 Gew.-%, bezogen auf das Gewicht der Monomeren, eingesetzt, wobei die Comonomere einzeln oder als Mischung verwendet werden können.

Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1;

Vinylester, wie Vinylacetat;

Styrol, substituierte Styrole mit einem Alkylsubstituenten in der Seitenkette, wie z. B. $\alpha$-Methylstyrol und $\alpha$-Ethylstyrol, substituierte Styrole mit einem Alkylsubstituenten am Ring, wie Vinyltoluol und p-Methylstyrol, halogenierte Styrole, wie beispielsweise Monochlorstyrole, Dichlorstyrole, Tribromstyrole und Tetrabromstyrole;

Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole;

Vinyl- und Isoprenylether;

Maleinsäurederivate, wie beispielsweise Maleinsäureanhydrid, Methylmaleinsäureanhydrid, Maleinimid, Methylmaleinimid; und Diene, wie beispielsweise Divinylbenzol.

Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.

Diese Verbindungen werden häufig in einer Menge von 0,1 bis 10 Gew.-%, vorzugsweise von 0,5 bis 3 Gew.-%, bezogen auf das Gesamtgewicht der Monomeren, eingesetzt.

Das Verhältnis Wasser zu Monomer liegt üblicherweise im Bereich von 0,4:1 bis 20:1, bevorzugt von 2:1 bis 8:1, bezogen auf das Gewicht der Komponenten.

Zur Stabilisierung der Dispersion ist die Verwendung von Aluminiumverbindungen, die in Wasser schwer löslich sind, notwendig. Hierzu gehören insbesondere Aluminiumoxid $Al_2O_3$ und Aluminiumhydroxid $Al(OH)_3$, wobei $Al(OH)_3$ bevorzugt ist. Von besonderem Interesse ist Aluminiumhydroxid, das durch Fällung hergestellt wird, wobei diese Fällung möglichst kurz vor Bildung der Dispersion erfolgen sollte. In besonderen Ausführungsformen des Verfahrens erfolgt die Fällung innerhalb von 2 Stunden, vorzugsweise innerhalb von 1 Stunde und ganz besonders bevorzugt innerhalb von 30 Minuten vor Bildung der Dispersion.

Beispielsweise kann $Al_2(SO_4)_3$ in Wasser gelöst werden. Diese Lösung kann anschließend mit einer Natriumcarbonat-Lösung versetzt werden bis der pH-Wert im Bereich von 5 bis 5,5 liegt. Durch diese Vorgehensweise wird eine kolloidale Verteilung der Aluminiumverbindung im Wasser erhalten, die besonders bevorzugt ist.

Die Aluminiumverbindung wird vorzugsweise in einer Menge von 0,5 bis 200 Gew.-%, besonders bevorzugt 3 bis 100 Gew.-% und ganz besonders bevorzugt 4 bis 20 Gew.-%, bezogen auf das Gesamtgewicht der verwendeten Monomere, eingesetzt. Bei Einsatz geringerer Mengen besteht die Gefahr, daß nur eine instabile Dispersion erhalten wird und eine Phasentrennung, zumindest aber die Bildung von größeren Aggregaten eintritt. Werden größere Mengen verwendet, so besteht die Gefahr, daß eine einheitliche Dispersion nicht erzielt werden kann.

Von besonderem Interesse sind auch Verfahren, in denen neben der Aluminiumverbindung weitere Hilfsmittel zur Stabilisierung eingesetzt werden. Hierzu gehören insbesondere oberflächenaktive Stoffe, wie beispielsweise anionische, kationische und neutrale Emulgatoren.

Anionische Emulgatoren sind z.B. Alkalimetallsalze von höheren Fettsäuren mit 8 bis 30 Kohlenstoffatomen, wie Palmitin-, Stearin- und Ölsäure, Alkalimetallsalze von Sulfonsäuren mit beispielsweise 8 bis 30 Kohlenstoffatomen, insbesondere Natriumsalze von Alkyloder Arylalkylsulfonsäuren, Alkalimetallsalze von Halbestern der Phthalsäure, und Alkalimetallsalze von Harzsäuren, wie Abitinsäure.

Kationische Emulgatoren sind unter anderem Salze langkettiger, insbesondere ungesättigter Amine mit 10 bis 20 Kohlenstoffatomen, oder quaternäre Ammoniumverbindungen mit längerkettigen Olefin- oder Paraffinresten.

Neutrale Emulgatoren sind z.B. ethoxylierte Fettalkohole, ethoxylierte Fettsäuren und ethoxylierte Phenole und Fettsäureester von mehrwertigen Alkoholen wie Pentaerythrit oder Sorbit.

Die zuvor genannten Emulgatoren werden vorzugsweise im Bereich von 0 bis 5 Gew.-%, besonders bevorzugt von 0,3 bis 3 Gew.-%, bezogen auf das Gewicht der Aluminiumverbindung, eingesetzt.

Darüber hinaus können der Mischung vor, während oder nach Bildung der Dispersion die üblichen Zusatzstoffe und Hilfsmittel beigefügt werden. Hierzu gehören insbesondere Stoffe, die den Partikeln bestimmte Eigenschaften verleihen, wie Polymere, Farbstoffe und Pigmente, die gegebenenfalls ferromagnetische Eigenschaften aufweisen. Des weiteren können Komplexbildner, wie EDTA oder Trilon A, und Verbindungen, welche die Bildung von Kesselbelag verhindern, wie Polyethylenglykol, eingesetzt werden.

Um die Perlpolymerisate zu herzustellen, erfolgt das Dispergieren bei einer Schergeschwindigkeit $\geq 10^3 \ s^{-1}$. Vorzugsweise liegt die Schergeschwindigkeit im Bereich von $10^4 \ s^{-1}$ bis $10^5 \ s^{-1}$. Bei Schergeschwindigkeiten $< 10^3 \ s^{-1}$ wird die Teilchengröße des entstehenden Perlpolymerisats größer als $40 \mu m$. Die Schergeschwindigkeit kann als Wert definiert werden, den man erhält, indem man den absoluten Wert der Geschwindigkeitsdifferenz von zwei Ebenen durch die Entfernung zwischen den zwei Ebenen dividiert, wobei sich die zu dispergierende Mischung im Raum zwischen den beiden Ebenen, die einen geringen Abstand von bis zu 6 mm aufweisen, befindet.

Die Herstellung der Dispersion kann mit jedem hierfür geeigneten Verfahren erfolgen. Im allgemeinen werden hierfür Dispergatoren eingesetzt, die dem Fachmann bekannt sind. Hierzu gehören u.a. Dispermat, Fa. VMA-Getzmann, Reichshof; Ultra-Turrax, Fa. Janke und Kunkel, Staufen und Druckhomogenisator, Fa. Gaulin, Lübeck. Des weiteren sind Geräte mit einem Rotor-Stator-System bekannt, etwa Dispax, Fa. Janke und Kunkel, Staufen; Cavitron- Homogenisatoren, Fa. V. Hagen & Funke, Sprochhövel; Homogenisatoren der Fa. Kotthoff, Essen und Homogenisatoren der Fa. Doee Oliver, Grevenbroich. Üblicherweise werden diese Geräte bei Drehzahlen von 1000 bis 25000 $min^{-1}$, bevorzugt 2000 bis 25000 $min^{-1}$ betrieben. Des weiteren können die zur Bildung der Dispersion erforderlichen hohen Scherkräfte ebenso durch Einwirkung von Ultraschall, Hindurchpressen der zu dispergieren Mischung unter hohem Druck durch einen engen Spalt oder durch Düsen kleinen Durchmessers sowie mit Hilfe von Kolloidmühlen erzielt werden.

Das Dispergieren der Monomere sowie der weiteren Bestandteile der Reaktionsmischung findet im allgemeinen bei Temperaturen im Bereich von 0 bis 100°C, vorzugsweise im Bereich von 20 bis 60°C statt, ohne hierauf beschränkt zu sein.

Die Dispergationsdauer kann in einem weiten Bereich in Abhängigkeit vom gewünschten Durchmesser der Monomertröpfchen, von der einzustellenden Größenverteilung und von den Mengenverhältnissen der Mischungsbestandteile liegen. Im allgemeinen kann die Dispersion innerhalb weniger Stunden hergestellt werden.

Das Dispergieren erfolgt im allgemeinen vor Beginn der Polymerisation. Allerdings kann, insbesondere zu Beginn der Polymerisation eine hohe Scherkraft auf die Dispersion einwirken, um eine mögliche Bildung von größeren Aggregaten zu vermeiden. Andererseits sollte die Polymerisation bald nach Bildung der Dispersion erfolgen. Überraschend wurde jedoch festgestellt, daß die durch die Aluminiumverbindung stabilisierte Dispersion über einen relativ großen Zeitraum haltbar ist. Diese Eigenschaft erleichtert die Verwendung üblicher Polymerisationsanlagen, da im Gegensatz zu vielen herkömmlichen Verfahren, zu Beginn der Polymerisation keine Einwirkung von Scherkräften erforderlich ist.

Die Polymerisation kann bei Normaldruck, Unter- od. Überdruck durchgeführt werden. Auch die Polymerisationstemperatur ist unkritisch. Je nach verwendetem Initiatorsystem liegt sie im allgemeinen jedoch im Bereich von 0˚ - 200˚C, vorzugsweise 40˚ - 130˚C und besonders bevorzugt 60˚ - 120˚C, ohne daß hierdurch eine Beschränkung erfolgen soll.

Nach Beendigung der Polymerisation kann die Aluminiumverbindung beispielsweise durch Zugabe von Schwefel- oder Salzsäure in eine wasserlösliche Form überführt werden. Das Perlpolymerisat kann durch Filtration unter Druck vom Wasser abgetrennt werden, ohne daß Probleme auftreten. Werden bekannte organische Verbindungen anstatt der Aluminiumverbindung zur Stabilisierung der Dispersion eingesetzt, ist eine derartige Filtration aufgrund der rheologischen Eigenschaften der Mischung nicht möglich.

Die gemäß dem zuvor beschriebenen Verfahren erhaltenen Perlpolymerisate werden in Formmassen eingearbeitet, um zum Gegenstand der vorliegenden Erfindung zu gelangen.

Als Matrixpolymere eignen sich alle für diesen Zweck bekannten thermoplastisch verarbeitbaren Polymere. Hierzu gehören unter anderem Polyalkyl(meth) acrylate, wie beispielsweise Polymethylmethacrylat (PMMA), Polyacrylnitrile, Polystyrole, Polyether, Polyester, Polycarbonate, Polyvinylchloride. Hierbei sind Polyalkyl(meth)acrylate bevorzugt. Diese Polymere können einzeln sowie als Mischung eingesetzt werden. Des weiteren können diese Polymere auch in Form von Copolymeren vorliegen.

Besonders bevorzugte Formmassen weisen mindestens 60 Gew.-%, bezogen auf das gesamte Gewicht der Formmasse, Matrixpolymere auf, die durch Polymerisation einer Monomerenmischung erhältlich sind, die mindestens 60 Gew.-%, bevorzugt mindestens 80 Gew.-%, (Meth)acrylate aufweist. In besonderen Ausgestaltungen beträgt der Anteil dieser bevorzugten Matrixpolymere mindestens 80 Gew.-%. Hinsichtlich der (Meth) acrylate kann auf die zuvor dargelegte Definition verwiesen werden. Hierbei ist die Verwendung von Methylmethacrylat besonders bevorzugt.

Derartig besonders bevorzugte Formmassen sind unter dem Handelsnamen PLEXIGLAS® von der Fa. Röhm GmbH kommerziell erhältlich.

Das Gewichtsmittel des Molekulargewichts $\bar{M}_w$ der erfindungsgemäß als Matrixpolymere zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne daß hierdurch eine Einschränkung erfolgen soll.

Wesentlich für die diffuse Ausstattung der Formmassen ist, daß die Perlpolymerisate einen vom Matrixpolymer unterschiedlichen Brechungsindex $n_D$ bei 20˚C aufweisen. Hierbei wird die Differenz zwischen dem Brechungsindex der Matrixpolymere und dem Brechungsindex der Perlpolymerisate bei der Na-D-Linie (589 nm) und bei 20˚C gemessen. Die erfindungsgemäßen Formmassen weisen eine Differenz des Brechungsindexes von mindestens 0,01, vorzugsweise mindestens 0,02 und besonders bevorzugt mindestens 0,05 auf. Je größer die Differenz, desto geringer kann der Anteil der Perlpolymerisate in der Formmasse gewählt werden, um gleiche Streueigenschaften zu erhalten.

Essentiell ist die Differenz beider Brechungsindizes. Dementsprechend kann der Brechungsindex der Matrixpolymere größer oder kleiner als der Brechungsindex der Perlpolymerisate sein. Zur Einstellung des Brechungsindexes können bekannte Methoden eingesetzt werden. Beispielsweise können bei der Herstellung der Matrixpolymere oder der Perlpolymerisate Monomere copolymerisiert werden, die Schwefelatome enthalten.

Der Anteil der Perlpolymerisate in der Formmasse ist abhängig vom zu erzielenden Streueffekt. Im allgemeinen enthalten die Formmassen 0,1 Gew.-% bis 50 Gew.-%, vorzugsweise 1 Gew.-% bis 20 Gew.-% und besonders bevorzugt 2 Gew.-% bis 15 Gew.-% Perlpolymerisate, bezogen auf das Gesamtgewicht der Formmasse, ohne daß hierdurch eine Beschränkung erfolgen soll.

Die Formmassen können übliche Zusatzstoffe aller Art enthalten. Hierzu gehören unter anderem Antistatika, Antioxidantien, Entformungsmittel, Flammschutzmittel, Schmiermittel, Farbstoffe, Fließverbesserungsmittel, Füllstoffe, Lichtstabilisatoren und organische Phosphorverbindungen, wie Phosphite oder Phosphonate, Pigmente, Verwitterungsschutzmittel und Weichmacher.

Aus den zuvor beschriebenen Formmassen können durch bekannte Verfahren, wie beispielsweise Spritzguß oder Extrusion Formkörper erhalten werden, die in der Lage sind diffuses Licht abzustrahlen.

Besondere Ausführungsformen des lichtstreuenden Formkörpers zeigen eine Transmission (T) gemäß DIN 5036 ≥ 72%, vorzugsweise ≥ 76%, einen Gelbwert (G) gemäß DIN 6167 ≤ 15%, vorzugsweise ≤ 10% und einen Energiehalbwertswinkel (β) ≥ 10˚, vorzugsweise ≥ 15˚, ohne daß hierdurch eine Beschränkung erfolgen soll.

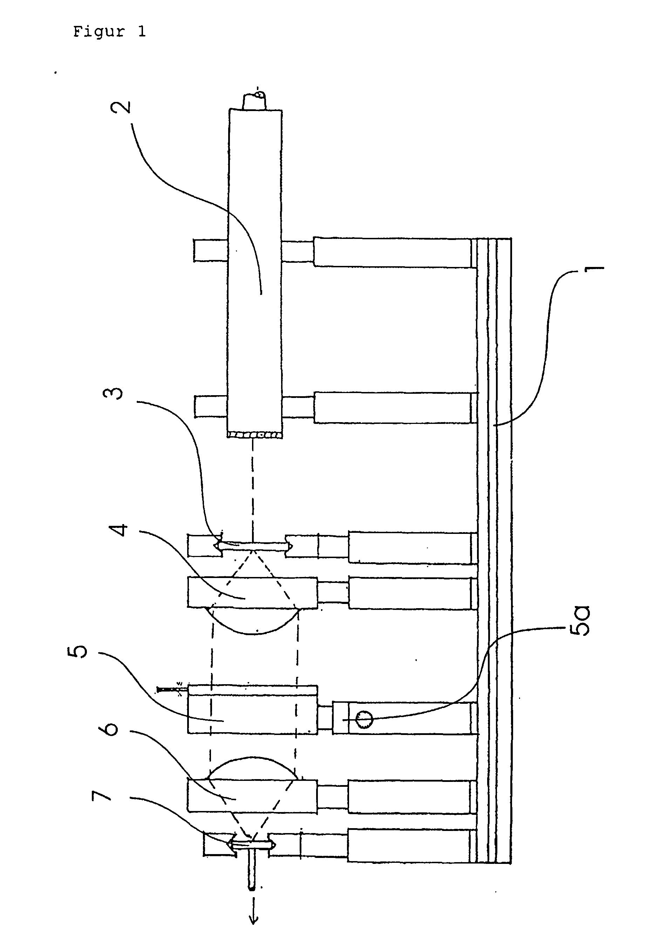

Der Energiehalbwertswinkel (β) wird mit der in Figur 1 abgebildeten Apparatur bestimmt:

Das Meßgerät besteht aus einer Grundplatte (1) auf die gemäß Figur 1 folgende Komponenten montiert sind:

- He-Ne-Laser mit Strahl-Absperrblende (2)
- Probenhalter (3) im Focus der
- Kondensorlinse (4) mit Durchmesser 55 mm; f = 39 mm
- Irisblende (5) mit max. Durchmesser 60 mm und Höhenanschlag (5a),
- Kondensorlinse (6) mit Durchmesser 55 mm; f = 39 mm mit Focus auf der
- Fotodiode (7)

Ohne Probe und bei geöffneter Strahl-Absperrblende des He-Ne-Laser (2) fällt der ursprünglich im Durchmesser ca. 1 mm messende Laserstrahl in der angegebenen Reihenfolge mittig durch jede Komponente und zentral auf die Fotodiode (7). Bei einer eingebauten, transparenten und lichtstreuenden Probe wird der transmittierte Anteil des Laserstrahls, abhängig vom Streuvermögen der Probe divergent aufgeweitet. Die Kondensorlinse (4) formt daraus einen aufgeweiteten Parallelstrahl von maximal 55 mm Durchmesser, der ungehindert durch die voll geöffnete Irisblende (5) auf die zweite Kondensorlinse (6) und von dieser auf die Sensorfläche der Photodiode (7) fokussiert wird. Ein Meßgerät zeigt den Diodenstrom an, der dem Lichtstrom proportional ist. Schließt man die Irisblende (5) langsam, dann eliminiert diese von außen her zunehmend Lichtstrahlen und die angezeigte Stromstärke nimmt ab. Der Blendendurchmesser, bei dem die Hälfte der ursprünglichen Stromstärke angezeigt wird, charakterisiert den Energiehalbwertswinkel (β).

Die Bestimmungsgleichung hierzu lautet:

$$\beta = \arctan \frac{D}{2f}$$

mit

D = Blendendurchmesser bei halber Stromstärke in mm,
f = Brennweite der Kondensorlinse = 39 mm.

Die Dicke des Formkörpers ist von der Anwendung abhängig. So können die erfindungsgemäßen Formmassen zu Folien extrudiert werden. Des weiteren können die Formmassen zu Platten mit den üblichen Maßen geformt werden. Besondere Ausgestaltungen der erfindungsgemäßen Formkörper weisen eine Dicke im Bereich von 0,05 mm bis 50 mm, vorzugsweise 0,1 bis 25 mm auf.

Des weiteren können die erfindungsgemäßen Formmassen als Coextrusionsschicht auf andere Folien aufgebracht werden. Verfahren hierfür sind an sich bekannt.

Nachfolgend wird die Erfindung durch Beispiele und Vergleichsbeispiele eingehender erläutert, ohne daß die Erfindung auf diese Beispiele beschränkt werden soll.

Beispiel 1

Zur Herstellung des Suspensionspolymerisats wurde ein Aluminiumhydroxid-Pickering-Stabilisator verwendet, der durch Fällung aus Aluminiumsulfat und Sodalösung unmittelbar vor Beginn der eigentlichen Polymerisation hergestellt wurde. Hierzu wurden zunächst 16 g $Al_2(SO_4)_3$, 0,032 g Komplexbildner (Trilon A) und 0,16 g Emulgator (Emulgator K 30 erhältlich von der Fa. Bayer AG; Natriumsalz eines $C_{15}$-Paraffinsulfonats) in 0,8 1 destilliertem Wasser gelöst. Anschließend wurde bei einer Temperatur von ca. 40˚C eine 1N Natriumcarbonat-Lösung zu dem in Wasser gelöstem Aluminiumsulfat unter Rühren zugegeben, wobei der pH-Wert anschließend im Bereich von 5 bis 5,5 lag. Durch diese Vorgehensweise wurde eine kolloidale Verteilung des Stabilisators im Wasser erzielt.

Nach der Fällung des Stabilisators wurde die wäßrige Phase in ein Becherglas überführt. Hierzu wurden 110g Methylmethacrylat, 80g Benzylmethacrylat und 10g Allylmethacrylat sowie 4g Dilaurylperoxyd und 0,4g tert.-Butylper-2-ethylhexanoat gegeben. Diese Mischung wurde mittels eines Dispergators (Ultra-Turrax S50N-G45MF, Fa. Janke und Kunkel, Staufen) 15 Minuten bei 7000 U/min dispergiert.

Im Anschluß an die Scherung wurde das Reaktionsgemisch in den Reaktor, welcher auf die entsprechende Reaktionstemperatur von 80 ˚C vorgeheizt wurde, eingefüllt und bei ca. 80˚C (Polymerisationstemperatur) 45 Minuten (Polymerisationsdauer) unter Rühren (600 U/min) polymerisiert. Es folgte eine Nachreaktionsphase von 1 Stunde bei ca. 85˚C Innentemperatur. Nach Abkühlen auf 45˚C wurde der Stabilisator durch Zusatz von 50%iger Schwefelsäure in wasserlösliches Aluminiumsulfat überführt. Zur Aufarbeitung der Perlen wurde die erhaltene Suspension über ein handelsübliches Filtertuch filtriert und im Wärmeschrank 24 Stunden bei 50˚C getrocknet.

Die Größenverteilung wurde durch Laserextinktionsverfahren untersucht. Die Teilchen wiesen eine mittlere Größe $V_{50}$ von 7,1 um und eine Standardabweichung von 2,63 $\mu$m auf. Die Perlen hatten eine sphärische Form, wobei keine Fasern festgestellt werden konnten. Koagulation trat nicht auf.

Zur weiteren Untersuchung wurde eine PMMA-Standardformmasse (PLEXIGLAS® 7 N erhältlich von Röhm GmbH) mit 6 Gew.-% der in Beispiel 1 hergestellten Lichtstreuperlen modifiziert. Aus dieser Formmasse wurde durch Spritzguß ein Prüfkörper mit den Maßen 60mm x 45mm x 3mm hergestellt, an dem die Transmission (T) gemäß DIN 5036, der Gelbwert (G) gemäß DIN 6167 und der Energiehalbwertswinkel (β) gemäß der zuvor beschriebenen Weise bestimmt wurden. Die so erhaltenen Daten sind in Tabelle 1 dargestellt.

Vergleichsbeispiel 1

Das Beispiel 1 wurde im wesentlichen wiederholt, außer daß 24 g tri-Calciumphosphat anstatt des frisch gefällten Aluminiumhydroxids eingesetzt wurden.

Die Größenverteilung des so erhaltenen Perlpolymerisats wurde durch Laserextinktionsverfahren untersucht. Die Teilchen wiesen eine mittlere Größe $V_{50}$ von 56,9 $\mu$m und eine Standardabweichung von 20,8 $\mu$m auf.

Beispiel 2

Das Beispiel 1 wurde im wesentlichen wiederholt, wobei jedoch jeweils die 80fachen Mengen der Bestandteile eingesetzt wurden. Hierdurch mußten einige technisch bedingte Änderungen vorgenommen werden. Der gefällte Pikeringstabilisator wurde mit Monomeren, Initiator und Zusatzstoffen im Reaktor vorgelegt und anschließend bei einer Temperatur von 40 ˚C mit Hilfe eines Durchflußdispergators (Dispax-Reaktor, Fa. Janke und Kunkel) dispergiert. Hierzu wurde die Mischung 30 Minuten zyklisch durch den Dispergator geführt, wobei die Dispersion innerhalb des Reaktors mit einem konventionellen Rührer bei 150 U/min gerührt wurde.

Nach 30 Minuten wurde die Dispersion auf 80˚C erwärmt. Die Polymerisation und Aufarbeitung erfolgte gemäß Beispiel 1.

Die Größenverteilung des so erhaltenen Perlpolymerisats wurde durch Laserextinktionsverfahren untersucht. Die Teilchen wiesen eine mittlere Größe $V_{50}$ von 16,3 $\mu$m und eine Standardabweichung von 4,6 $\mu$m auf.

Zur weiteren Untersuchung wurde eine PMMA-Standardformmasse (PLEXIGLAS® 7 N erhältlich von Röhm GmbH) mit 6 Gew.-% der in Beispiel 2 hergestellten Lichtstreuperlen modifiziert. Aus dieser Formmasse wurde durch Spritzguß ein Prüfkörper mit den Maßen 60mm x 45mm x 3mm hergestellt, an dem die in Beispiel 1 beschriebenen Größen bestimmt wurden. Die so erhaltenen Daten sind in Tabelle 1 dargestellt.

Vergleichsbeispiel 2

Das Beispiel 1 wurde im wesentlichen wiederholt, außer daß 3,2 g Mowiol 4088, ein von der Fa. Clariant GmbH erhältlicher organischer Stabilisator, anstatt des frisch gefällten Aluminiumhydroxids eingesetzt wurden.

Die Herstellung der Dispersion und die Polymerisation erfolgte gemäß Beispiel 1. Aufgrund der rheologischen Eigenschaften der Mischung konnte die Zusammensetzung nicht über eine Druckfiltration aufgearbeitet werden.

Die Größenverteilung des so erhaltenen Perlpolymerisats wurde durch Laserextinktionsverfahren untersucht. Die Teilchen wiesen eine mittlere Größe $V_{50}$ von 4,56 um und eine Standardabweichung von 1,41 $\mu$m auf.

Zur weiteren Untersuchung wurde eine PMMA-Standardformmasse (PLEXIGLAS® 7 N erhältlich von Röhm GmbH) mit 6 Gew.-% der in Vergleichsbeispiel 2 hergestellten Lichtstreuperlen modifiziert. Aus dieser Formmasse wurde durch Spritzguß ein Prüfkörper mit den Maßen 60mm x 45mm x 3mm hergestellt, an dem die in Beispiel 1 beschriebenen Größen bestimmt wurden. Die so erhaltenen Daten sind in Tabelle 1 dargestellt.

Vergleichsbeispiel 3

Polymere mit einer Zusammensetzung gemäß Beispiel 1 wurden durch ein in DE-A-43 27 464 beschriebenes Fällungsverfahren in Cyclohexan hergestellt.

Die Teilchen wiesen eine mittlere Größe von 6 $\mu$m und eine Standardabweichung von 1,41 $\mu$m auf. Diese Werte wurden über rasterelektronenmikroskopische Aufnahmen bestimmt, wobei einzelne Teilchen gemessen und deren Zahl bestimmt wurden.

Zur weiteren Untersuchung wurde eine PMMA-Standardformmasse (PLEXIGLAS® 7 N erhältlich von Röhm GmbH) mit 6 Gew.-% der in Vergleichsbeispiel 3 hergestellten Lichtstreuperlen modifiziert. Aus dieser Formmasse wurde durch Spritzguß ein Prüfkörper mit den Maßen 60mm x 45mm x 3mm hergestellt, an dem die in Beispiel 1 beschriebenen Größen bestimmt wurden. Die so erhaltenen Daten sind in Tabelle 1 dargestellt.

Tabelle 1

| | T [%] | G [%] | β [˚] |
|---|---|---|---|
| Beispiel 1 | 76,3 | 9,4 | 22,5 |
| Beispiel 2 | 91,1 | 2,9 | 18,5 |
| Vergleichsbsp. 2 | 71,9 | 28,2 | - |
| Vergleichsbsp. 3 | 77 | 9,5 | 23,1 |

Die Prüfergebnisse in Tabelle 1 zeigen, daß die erfindungsgemäßen Formkörper (Beispiel 1 and 2), das Licht ohne großen Energieverlust sehr gut streuen. Des weiteren zeigen diese Formkörper Vorteile gegenüber dem Formkörper, in den die in Vergleichsbeispiel 2 erhaltenen Streuperlen eingearbeitet wurden. Zwar wird das Licht durch Einsatz des Streumittels stark gestreut, allerdings steigt dabei der Gelbwert G stark an und die Transmission T ist deutlich geringer als bei den Formmassen, die mit Streuperlen gemäß Beispiel 1 oder 2 modifiziert wurden. Eine starke Rückwärtsstreuung ist einem hohen Energieverlust gleichzusetzen. Dies ist auf die Zersetzung des verwendeten organischen Verteilers zurückzuführen.

Die optischen Eigenschaften sind bei Beispiel 1 und Vergleichsbeispiel 3 fast identisch. Nachteilig bei Vergleichsbeispiel 3 ist das Herstellungsverfahren der hier eingesetzten Streuperlen. Diese werden über eine Fällungspolymerisation in Cyclohexan hergestellt. Aufgrund der Morphologie der so hergestellten Perlen ist das Trocknungsverfahren aufwendig, wobei das Trocknungsverfahren wegen des organischen Lösungsmittels sicherheitstechnische Probleme bereitet.

**Patentansprüche**

1. Diffus ausgestattete Formmasse aufweisend Matrixpolymere und Perlpolymerisate mit einer mittleren Teilchengröße im Bereich von 5 bis 40 $\mu$m, die eine Differenz zwischen dem Brechungsindex der Matrixpolymere und dem Brechungsindex der Perlpolymerisate, gemessen bei der Na-D-Linie (589 nm) und bei 20° C von mindestens 0,01 aufweist, nach einem verfahren erhältlich, bei dem man eine polymerisierbare Zusammensetzung, die mindestens 50 Gew.-% (Meth) acrylate aufweist, in wäßriger Phase dispergiert und polymerisiert, **dadurch gekennzeichnet, daß** man die mit einer Aluminiumverbindung stabilisierte Dispersion bei einer Schergeschwindigkeit $\geq 10^3$ s$^{-1}$ herstellt.

2. Formmasse gemäß Anspruch 1, **dadurch gekennzeichnet, daß** man Al(OH)$_3$ zur Stabilisierung einsetzt.

3. Formmasse gemäß Anspruch 2, **dadurch gekennzeichnet, daß** man das Al(OH)$_3$ durch Fällung herstellt,

4. Formmasse gemäß einem oder mehreren der vorhergehenden Ansprüche, **dadurch gekennzeichnet, daß** die Konzentration der Aluminiumverbindung, bezogen auf das Gewicht der polymerisierbaren Zusammensetzung, im Bereich von 0,5 bis 200 Gew.-% liegt.

5. Formmasse gemäß Anspruch 4, **dadurch gekennzeichnet, daß** die Konzentration der Aluminiumverbindung, bezogen auf das Gewicht der polymerisierbaren Zusammensetzung, im Bereich von 3 bis 100 Gew.-% liegt.

6. Formmasse gemäß Anspruch 5, **dadurch gekennzeichnet, daß** die Konzentration der Aluminiumverbindung, bezogen auf das Gewicht der polymerisierbaren Zusammensetzung, im Bereich von 4 bis 20 Gew.-% liegt.

7. Formmasse gemäß einem oder mehreren der vorhergehenden Ansprüche, **dadurch gekennzeichnet, daß** die Teilchengröße im Bereich von 5 bis 20 $\mu$m liegt.

8. Formmasse gemäß einem oder mehreren der vorhergehenden Ansprüche, **dadurch gekennzeichnet, daß** die polymerisierbare Zusammensetzung mindestens 60 Gew.-% (Meth)acrylate aufweist.

9. Formmasse gemäß einem oder mehreren der vorhergehenden Ansprüche, **dadurch gekennzeichnet, daß** man zusätzlich einen Emulgator einsetzt.

10. Formmasse gemäß Anspruch 9, **dadurch gekennzeichnet, daß** die Konzentration des Emulgators, bezogen auf das Gewicht der Aluminiumverbindung, im Bereich von 0 bis 5 Gew.-% liegt.

11. Formmasse gemäß Anspruch 10, **dadurch gekennzeichnet, daß** die Konzentration des Emulgators, bezogen auf das Gewicht der Aluminiumverbindung, im Bereich von 0,3 bis 3 Gew.-% liegt.

12. Formmasse gemäß einem oder mehreren der vorhergehenden Ansprüche, **dadurch gekennzeichnet, daß** man die nach der Polymerisation erhaltene Dispersion filtriert.

13. Formmasse gemäß einem oder mehreren der vorhergehenden Ansprüche, **dadurch gekennzeichnet, daß** das Matrixpolymer Polyalkyl(meth)acrylate, Polyacrylnitrile, Polystyrole, Polyether, Polyester, Polycarbonate und/oder Polyvinylchloride umfaßt.

14. Formmasse gemäß einem oder mehreren der vorhergehenden Ansprüche, **dadurch gekennzeichnet, daß** die Formmasse mindestens 2 Gew.-%, bezogen auf das Gesamtgewicht der Formmasse, Perlpolymerisate aufweist.

15. Diffuser Formkörper erhalten durch thermoplastisches Formen einer Formmasse gemäß einem oder mehreren der Ansprüche 1 bis 14.

16. Diffuser Formkörper gemäß Anspruch 15, **dadurch gekennzeichnet, daß** die Transmission (T) gemäß DIN 5036 $\geq$ 72% ist.

17. Diffuser Formkörper gemäß Anspruch 15 oder 16, **dadurch gekennzeichnet, daß** der Gelbwert (G) gemäß DIN 6167 s 15% ist.

**18.** Diffuser Formkörper gemäß einem oder mehreren der Ansprüche 15 bis 17, **dadurch gekennzeichnet, daß** und der Energiehalbwertswinkel (β) ≥ 10˚ ist.

**19.** Diffuser Formkörper gemäß einem oder mehreren der Ansprüche 15 bis 18, **dadurch gekennzeichnet, daß** der Formkörper eine Dicke im Bereich von 0,5 mm bis 20 mm aufweist.

**Claims**

**1.** Moulding composition with diffusing properties, comprising matrix polymers and bead polymers with an average particle size in the range from 5 to 40 $\mu$m, difference between the refractive index of the matrix polymers and the refractive index of the bead polymers in these is at least 0.01, measured at the Na D line (589 nm) and at 20˚C, obtainable by a process in which a polymerizable mix which comprises at least 50% by weight of (meth)acrylates is dispersed in an aqueous phase and polymerized, **characterized in that** the dispersion, stabilized with an aluminium compound, is prepared at a shear rate ≥ $10^3$ $s^{-1}$.

**2.** Moulding composition according to Claim 1, **characterized in that** the stabilization is achieved using $Al(OH)_3$.

**3.** Moulding composition according to Claim 2, **characterized in that** the $Al(OH)_3$ is prepared by precipitation.

**4.** Moulding composition according to one or more of the preceding claims, **characterized in that** the concentration of the aluminium compound, based on the weight of the polymerizable mix, is in the range from 0.5 to 200% by weight.

**5.** Moulding composition according to Claim 4, **characterized in that** the concentration of the aluminium compound, based on the weight of the polymerizable mix, is in the range from 3 to 100% by weight.

**6.** Moulding composition according to Claim 5, **characterized in that** the concentration of the aluminium compound, based on the weight of the polymerizable mix, is in the range from 4 to 20% by weight.

**7.** Moulding composition according to one or more of the preceding claims, **characterized in that** the particle size is in the range from 5 to 20 $\mu$m.

**8.** Moulding composition according to one or more of the preceding claims, **characterized in that** the polymerizable mix comprises at least 60% by weight of (meth)acrylates.

**9.** Moulding composition according to one or more of the preceding claims, **characterized in that** use is also made of an emulsifier.

**10.** Moulding composition according to Claim 9, **characterized in that** the concentration of the emulsifier, based on the weight of the aluminium compound, is in the range from 0 to 5% by weight.

**11.** Moulding composition according to Claim 10, **characterized in that** the concentration of the emulsifier, based on the weight of the aluminium compound, is in the range from 0.3 to 3% by weight.

**12.** Moulding composition according to one or more of the preceding claims, **characterized in that** the dispersion obtained from the polymerization is filtered.

**13.** Moulding composition according to one or more of the preceding claims, **characterized in that** the matrix polymer encompasses polyalkyl (meth)acrylates, polyacrylonitriles, polystyrenes, polyethers, polyesters, polycarbonates and/or polyvinyl chlorides.

**14.** Moulding composition according to one or more of the preceding claims, **characterized in that** the moulding composition comprises at least 2% by weight of bead polymers, based on the total weight of the moulding composition.

**15.** Diffuse-effect moulding obtained by thermoplastic moulding of a moulding composition according to one or more of Claims 1 to 14.

**16.** Diffuse-effect moulding according to Claim 15, **characterized in that** the transmittance (T) to DIN 5036 is ≥ 72%.

**17.** Diffuse-effect moulding according to Claim 15 or 16, **characterized in that** the Yellowness Index (YI) to DIN 6167 is ≤ 15%.

**18.** Diffuse-effect moulding according to one or more of Claims 15 to 17, **characterized in that** the halved-energy angle (β) is ≥ 10˚.

**19.** Diffuse-effect moulding according to one or more of Claims 15 to 18, **characterized in that** the thickness of the moulding is in the range of from 0.5 to 20 mm.

**Revendications**

**1.** Masse de moulage apprêtée de manière diffusante présentant des polymères de matrice et des polymères en perle présentant une grosseur moyenne des particules dans la plage de 5 à 40 $\mu$m, qui présente une différence entre l'indice de diffraction des polymères de matrice et l'indice de diffraction des polymères en perles, mesurée par la ligne Na-D (589 nm) et à 20˚C d'au moins 0,01, pouvant être obtenue selon un procédé dans lequel on disperse une composition polymérisable, qui présente au moins 50% en poids de (méth)acrylates, en phase aqueuse et on polymérise, **caractérisée en ce qu'**on prépare la dispersion stabilisée avec un composé d'aluminium à une vitesse de cisaillement $10^3$ s$^{-1}$.

**2.** Masse de moulage selon la revendication 1, **caractérisée en ce qu'**on utilise Al(OH)$_3$ pour la stabilisation.

**3.** Masse de moulage selon la revendication 2, **caractérisée en ce qu'**on prépare Al(OH)$_3$ par précipitation.

**4.** Masse de moulage selon l'une ou plusieurs des revendications précédentes, **caractérisée en ce que** la concentration en composé d'aluminium, par rapport au poids de la composition polymérisable, se situe dans la plage de 0,5 à 200% en poids.

**5.** Masse de moulage selon la revendication 4, **caractérisée en ce que** la concentration en composé d'aluminium, par rapport au poids de la composition polymérisable, se situe dans la plage de 3 à 100% en poids.

**6.** Masse de moulage selon la revendication 5, **caractérisée en ce que** la concentration en composé d'aluminium, par rapport au poids de la composition polymérisable, se situe dans la plage de 4 à 20% en poids.

**7.** Masse de moulage selon l'une ou plusieurs des revendications précédentes, **caractérisée en ce que** la grosseur des particules se situe dans la plage de 5 à 20 $\mu$m.

**8.** Masse de moulage selon l'une ou plusieurs des revendications précédentes, **caractérisée en ce que** la composition polymérisable présente au moins 60% en poids de (méth)acrylates.

**9.** Masse de moulage selon l'une ou plusieurs des revendications précédentes, **caractérisée en ce qu'**on utilise en outre un émulsifiant.

**10.** Masse de moulage selon la revendication 9, **caractérisée en ce que** la concentration en émulsifiant, par rapport au poids du composé d'aluminium, se situe dans la plage de 0 à 5% en poids.

**11.** Masse de moulage selon la revendication 10, **caractérisée en ce que** la concentration en émulsifiant, par rapport au poids du composé d'aluminium, se situe dans la plage de 0,3 à 3% en poids.

**12.** Masse de moulage selon l'une ou plusieurs des revendications précédentes, **caractérisée en ce qu'**on filtre la dispersion obtenue après la polymérisation.

**13.** Masse de moulage selon l'une ou plusieurs des revendications précédentes, **caractérisée en ce que** le polymère de matrice comprend des poly((méth)acrylates d'alkyle), des polyacrylonitriles, des polystyrènes, des polyéthers, des polyesters, des polycarbonates et/ou des poly(chlorures de vinyle).

**14.** Masse de moulage selon l'une ou plusieurs des revendications précédentes, **caractérisée en ce que** la masse de moulage présente au moins 2% en poids, par rapport au poids total de la masse de moulage, de polymères en perles.

**15.** Corps façonné diffusant, obtenu par moulage thermoplastique d'une masse de moulage selon l'une ou plusieurs des revendications 1 à 14.

**16.** Corps façonné diffusant selon la revendication 15, **caractérisé en ce que** la transmission (T) selon la norme DIN 5036 est $\geq$ 72%.

**17.** Corps façonné diffusant selon la revendication 15 ou 16, **caractérisé en ce que** la valeur de jaune (G) selon la norme DIN 6167 est $\leq$ 15%.

**18.** Corps façonné diffusant selon l'une ou plusieurs des revendications 15 à 17, **caractérisé en ce que** l'angle de demi-valeur d'énergie ($\beta$) est $\geq$ 10˚.

**19.** Corps façonné diffusant selon l'une ou plusieurs des revendications 15 à 18, **caractérisé en ce que** le corps façonné présente une épaisseur dans la plage de 0,5 à 20 mm.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0443609 A
- DE 19844716
- US 5451650 A
- DE 4327464 A